# EUROPEAN PATENT SPECIFICATION

(11) **EP 4 006 807 B1**
(45) Date of publication and mention of the grant of the patent: **28.10.2026**
(21) Application number: 21182471.9
(22) Date of filing: 29.06.2021
(51) Int. Cl.: G06Q 30/02, G06Q 30/0201, G06Q 30/0283

(54) **EVENT MONITORING WITH SUPPORT SYSTEM INTEGRATION**
EREIGNISÜBERWACHUNG MIT UNTERSTÜTZUNGSSYSTEMINTEGRATION
SUIVI DES ÉVÉNEMENTS AVEC INTÉGRATION DU SYSTÈME DE SUPPORT

(30) Priority: 25.11.2020 US 202017104236
(43) Date of publication of application: 01.06.2022
(73) Proprietor: NCR Voyix Corporation, Atlanta, GA 30308 (US)
(72) Inventor: KLUGE, Thomas, 1035 Amsterdam (NL); ISMAIL, Izham, 46150 Selangor (MY); MCQUINLAN, Thomas Alfred, Victoria, 3984 (AU); LORZANO, Gwendelyn Maglasang, 43300 Seri Kembangan (MY); SINGH, Sanjeev Kumar, Johns Creek, 30097 (US)
(74) Representative: Secerna LLP

(56) References cited:
- US-A1- 2016 217 447

## Description

Many enterprises have native support systems that monitor events but typically these systems fail to produce sufficient audit trails, are late to engage the necessary level of support when events warrant, and/or inappropriately engage support staff before subsequent events reveal that a problem event was resolved. This can cause inefficient use of support staff and regulatory compliance issues for the enterprises.

Convenience and fuel retailers are particularly affected by failures in their support systems to adequately monitor and audit fuel price update events. These events span multiple internal systems for the site, the terminal, the fuel controller, and pricing board (digital signs, *etc.*)*.* It is critical to ensure the price update happens timely to ensure regulatory and industry standards compliance. Failures in the price update process can prevent fuel sales in stores, loss of revenue for retailers, and brand damage.

Fuel price update failures can be due to multitude of issues on the different system components including fuel price change issues and fuel authorization issues. Monitoring of the price change and timely resolution of issues are critical to ensure proper operation of the fuel retail business.

Oftentimes, support systems are not alerted when a price update is not timely updated, resulting in substantial loss of revenues for the retail store. Further, when support systems are alerted, the price update may have already been resolved and properly updated throughout the retailer's systems, such that support staff is engaged when the staff is no longer needed. Additionally, because the price update involves multiple systems, the audit trails (assuming they exist) are incomplete and/or inaccurate with respect to the actions taken and time needed to fully complete the price update throughout the systems of the retailer. Also, any available audit trail may have to be pieced together from each of the systems.

US 2016/217447 describes a method and a system for dynamically managing prices of multiple items in a retail entity. A price management system (PMS) is provided to operably communicate with transmission devices and receiving display terminals. Each receiving display terminal is positioned at the retail entity and/or a remote location. The PMS dynamically receives sales information of the items from billing sources at the retail entity and determines pricing data for the items based on the dynamically received sales information and pricing criteria. The PMS identifies one or more items requiring a change of the prices based on the determined pricing data. The PMS, in communication with a positioning unit of each receiving display terminal, locates the receiving display terminals associated with the identified items. The PMS transmits the determined pricing data for the identified items to the located receiving display terminals via the transmission devices at preconfigured time instants.

The invention relates to a method, as further defined in claim 1, and a system, as further defined in claim 7, for promptly detecting missing update events that span across multiple internal systems for a site.

Embodiments of the present invention will now be described hereinafter, by way of example only, with reference to the accompanying drawings in which:
FIG. 1A is a diagram of a system for event monitoring and support system integration, according to an example embodiment.
FIG. 1B is a diagram of a method for event monitoring and support system integration, according to an example embodiment.
FIG. 2 is a diagram of another method for event monitoring and support system integration, according to an example embodiment.
FIG. 3 is a diagram of yet another method for event monitoring and support system integration, according to an example embodiment.

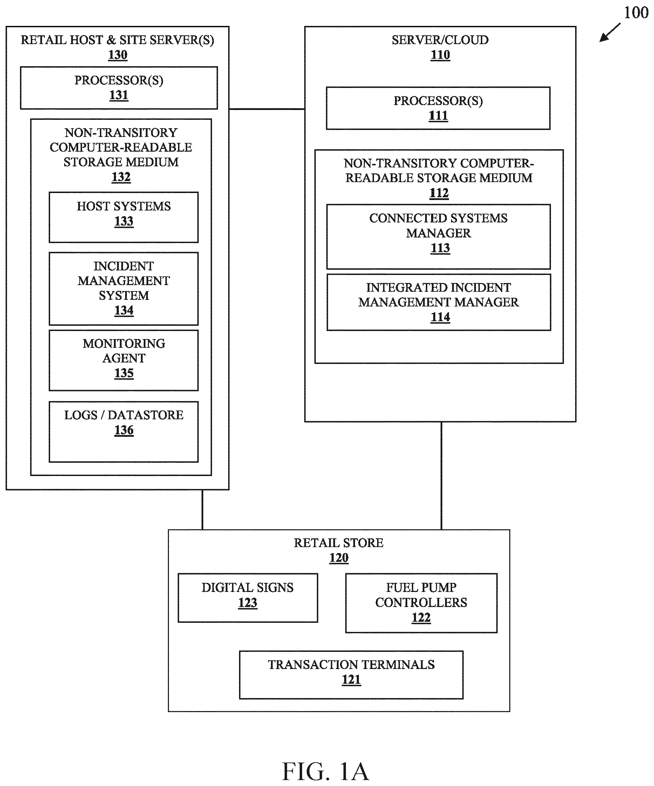

FIG. 1A is a diagram of a system 100 for event monitoring and support system integration, according to an example embodiment. It is to be noted that the components are shown schematically in greatly simplified form, with only those components relevant to understanding of the embodiments being illustrated.

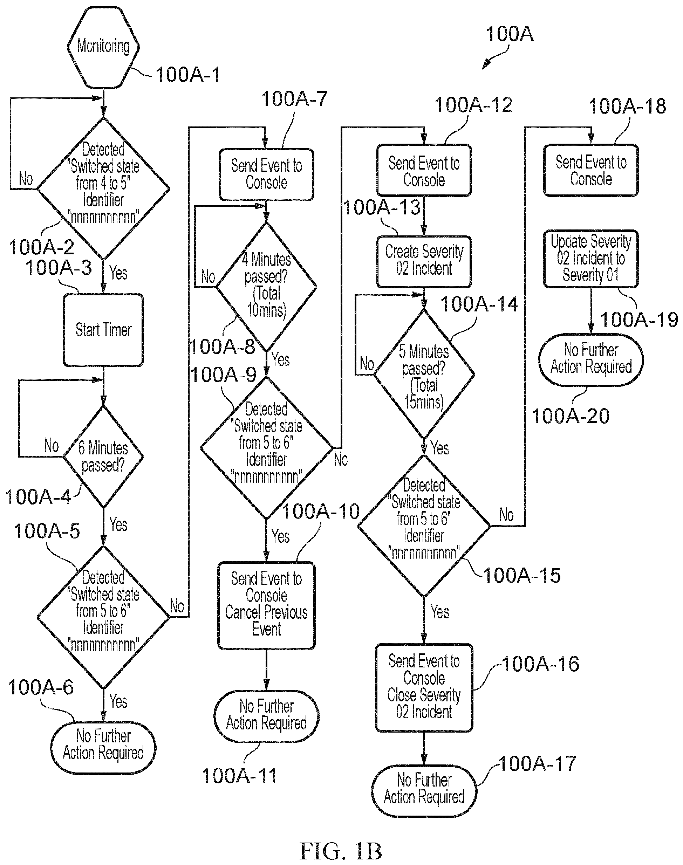

Furthermore, the various components (that are identified in the FIG. 1) are illustrated and the arrangement of the components is presented for purposes of illustration only. It is to be noted that other arrangements with more or with less components are possible without departing from the teachings of event monitoring and support system integration, presented herein and below.

As will be demonstrated more clearly herein and below, system 100 proactively monitors an event that is associated with updating resource information across multiple interconnected systems. This is done by monitoring resource information relevant to a detected event for expected changes (updates) until the resource information spanning the interconnected systems reaches a point for which level three or (highest level) of support is needed or until it is detected that the update associated with the event for the multiple resource information has been updated. When the update precipitated by the event is not progressing as it should be during the update processing with the interconnected systems, the appropriate level of support is notified and when the update does not complete when it expected to complete, a level three or a highest level of support ticket is automatically generated in a retailer's native incident management system. An audit of the monitoring is maintained.

It is to be noted that system 100 can be processed with a variety of different retail environments for a variety of different purposes. For purposes of illustrating a particular application of system 100, system 100 is described for monitoring an update of a fuel price within a convenience fuel retail environment. Again, it is noted other applications of system 100 are foreseeable for events that require tracking or that precipitate downstream processing that spans multiple interconnected systems of a retailer.

System 100 includes a server/cloud 110, a retail store, 120, and retail host and site servers 130.

Server/cloud 110 comprises at least one processor 111 and a non-transitory computer-readable storage medium 112. Medium 112 comprises executable instructions representing connected systems manager 113, and an integrated incident management manager 114. Executable instructions when executed by processor 111 from medium 112 cause processor 111 to perform the processing discussed herein and below with respect to 113-114.

Retail store 120 comprises transaction terminals 121, fuel pump controllers 122, and, optionally, digital signs 123. Each of these devices comprises processors and executable instructions for interacting with retail host and site servers 130 and, in some instances, server/cloud 110.

Retail host and site servers 130 may comprise a plurality of servers 130 for a given retailer; for instance, there may be one or more host or backend servers 130 and a plurality of site servers 130 (each site having its own server 130). Servers 130 comprise processors 131 and non-transitory computer-readable storage mediums 132. Mediums 132 comprise executable instructions for interconnected host systems 133 of the retailer, an incident management system 134 and a monitoring agent 135. Executable instructions when executed by processors 131 from mediums 132 cause processors 131 to perform processing operations discussed herein and below with respect to 133-135. Mediums 132 also comprise a plurality of logs/datastores 136.

It is to be noted that monitoring agent 135 may be replicated as an executable instance on each site server 130 associated with retail servers 130, such that an instance of agent 135 performs processing (as discussed herein and below) for a given site (such as retail store 120) and a different instance performs processing for a different site.

Host systems 133 perform a variety of operations and services for a retailer, such a fuel controller management, site management, terminal management, digital sign management, resource management, transaction processing, inventory management, *etc.* Each system 133 is configured to raise a variety of events associated with an activity or associated with a status condition of a given asset.

Monitoring agent 135 is configured to identify and monitor expected activities associated with a preconfigured event raised by one or more of the systems 133. The preconfigured event for purposes of the convenience retail fuel environment illustration with FIG. 1A, is an event that is generated when a change in price for a fuel grade or changes in prices for multiple fuel grades is raised. Agent 135 is also configured to look for the preconfigured event in a specific manner, such as via a particular log or audit file 136.

In an embodiment, monitor agent 135 may dynamically interpret a predefined configuration file that defines the event to be monitored and defines a location or manner by which the event can be detected. Still further monitor agent 135 configures, via the configuration file, to perform a preconfigured process flow that monitors state changes posted by the relevant systems 133 that require updates because of the price change event.

In this way, agent 135 may be implemented as a generic source code that processes the configuration file for performing custom event monitoring and reporting back to connected systems manager 113 at an appropriate processing point defined within the conditional configured process flow of the configuration file.

When agent 135 identifies a condition that needs to be reported to connected systems manager 113, the event information for the event is sent over a network connection to connected systems manager 113. The event and event information may also be posted to a dashboard or to a support console by connected systems manager 113. Assuming the resource information is updated properly within the predefined timeframes or based on the predefined conditions, the monitoring ends. However, if such is not the case, then integrated incident management manager 114 interacts with the retailer's incident management system 134 to create a level 3 or a highest level of support ticket for the event.

A more detailed process flow for system 100A is shown in FIG. 1B along with specific preconfigured timeframes and conditions. It is noted that these preconfigured timeframes and/or preconfigured conditions can be provided as parameter values that are evaluated by both agent 135 and connected systems manager 113.

At 100A-1 the agent 135 is initiated on a retailer's site server 130 for store 120 for purposes of monitoring the updating of resource information associated with a price fuel change instituted by the retailer for store 120.

Agent 135 monitors a specific file or for a creation of a specific file/log/datastore 136 within a specific location on site server 130 that is indicative of a price change event being raised for the store 120. At 100A-2, if no change is detected, the monitoring for the price change event continues in a loop on site server 130. For example, at 100A-2, agent 135 looks for a price state (event information) that switched from a value unchanged to a value of update posted (shown in FIG. 1B as an unchanged value being represented by a numeric value of 4 to an update posted value being represented by a numeric value of 5). The price change event is associated with a unique identifier (the string of n's represents a unique price change event identifier in FIG. 1B.

If agent 135 detects a state change switched from 4 to 5 for the event information from log 136, at 100A-2, agent 135, at 100A-3 sets a timer for a preconfigured amount of time (6 minutes in FIG. 1B). As long as the timer has not expired, agent 135 idles, at 100A-4. When the time expires, at 100A-5, agent 135 checks to see if the event information has switched from a state value of update posted to a state value of update executed (shown in FIG. 1B as numeric value 5 (for the updated posted value) to numeric value 6 (for updated executed value)). Assuming this is the case, agent 135 ends at 100A-6. This is an indication that resource information was updated within the host systems 133 for the price change event and nothing further is needed.

However, if the state (event information) did not change from 5 to 6 at 100A-5, agent 135 sends the event identifier and event information, at 100A-7 to connected systems manager 113, which may also cause a dashboard or a console to be updated with the event identifier and event information.

Connected systems manager 113, at 100A-8, sets a timer (4 minutes - but again this is a configured time period or a configured condition). Connected systems manager 113 loops or idles until the timer expires and then, at 100A-9, rechecks to see if the state (event information) has changed from 5 to 6 using the price change event identifier to uniquely identify the price change event. Moreover, the event information (state) value being checked is again obtained from the corresponding log 136 (same log 136 that agent 135 was monitoring).

Assuming the state changed from 5 to 6, at 100A-10, connected systems manager 113 sends the price change event to a dashboard or console and cancels the event. At 100A-11, no further action is needed for the price change event as all resource information for the resources associated with the host systems 133 were updated properly based on the event.

Assuming the state change did not move from 5 to 6, at 100A-10, connected systems manager 113 sends, at 100A-12, the event and event information to the console or dashboard. At 100A-13, connected systems manager 113 creates or generates a severity 2 (next level of severity from what was raised at 100A-7) ticket or incident. Next, at 100A-14, connected systems manager 113 sets a time for 5 minutes. At 100A-15 and after the 5 minutes has passed, connected systems manager 113 checks again to see if the state or event information has changed within log 136 from 5 to 6. If this is the case, at 100A-16, connected systems manager 113 sends the event and event information to the console and closes the severity level 2 incident or ticket. At 100A-17, connected systems manager 113 stops monitoring the event as all resource information for the resources associated with host systems 133 were updated properly based on the event.

However, if the state information does not change from 5 to 6 as expected, at 100A-18, connected systems manager 113 sends the event and event information to the console or dashboard. This causes integrated incident management manager 114, at 100A-19, to update severity of the level 2 incident to a level 1 incident in the retailer's incident management system 134 (which will automatically notify support staff to address the price change event because not all resource information for the resources of the host systems are showing an update with the price change that was associated with the price change event. Once the level 1 incident is sent to the retailer's incident management system 134, no further monitoring is needed for the event and event monitoring concludes at 100A-20.

In an embodiment, both agent 135 and connected systems manager 135 may monitor more than one log/datastore 136 for state changes that reflect updated resource information for the resources that span the host systems 133. That is, each individual system may write updates to their resources in different logs/data stores 136; rather than a same log/datastore 136. In this embodiment, the event identifier for the price change event is the same across the different logs/data stores 136 or can be uniquely identified across the different logs/data stores.

In an embodiment, the resource information reflects a status or a condition of a resource. The status is a current fuel price being reported by the resource and the resource may include the fuel pump controllers 122, the digital signs 123, and transaction terminals 121. The event information is a value indicating that the resource information was updated/changed (changed from posted to executed/updated) for a given resource.

In an embodiment, both agent 135 and connected systems manager 113 maintains a separate audit trail comprising the event identifier, noted event information, and time stamps during the monitoring shown in FIG. 1B. This audit tail may be used to demonstrate compliance with a fuel price change being properly updated in a timely fashion or to demonstrate that the price was not updated in a timely fashion.

Method 100A provides monitoring of the fuel price update via a software agent 135 deployed on the retailer server site 130 that continuously monitors for the trigger or initiating during a fuel price update process based on a presence of a fuel price change event within log 136. The monitoring is done for price update for each fuel grade. The agent 135 monitors state changes from the point the change is initiated (posted) to the point it completes successfully (executed). In case the state change does not happen (does not move from posted to executed) within a configured time period, the agent 135 detects that as abnormal condition and raises an event and submits to connected systems manager 113 for further monitoring of the condition. If the state change continues to indicate problem, connected systems manager 113 escalates the event as an incident for service desk attention. The agent 113 continues to monitor the price update process to detect if the condition has cleared and resolves the event automatically. However, if the price update does not complete within acceptable time then the severity of the incident is updated for manual intervention by the service desk person associated with the retailer via the retailer's incident management system 134. The service desk person can then troubleshoot and resolve issue remotely or through working with a store 120 associate to resolve.

A summary of method 100A is as follows. Agent 135 detects a posted fuel price change event in log 136 of site server 120, the initial event information or state is set to Posted. If the event information or state does not change within log 136 to executed within a first configured of time of 6 minutes, agent 135 generates an event for the event and sends it to the connected systems manager 113. Connected systems manager 113 waits for a second configured period of time of 4 minutes (10 minutes of elapsed time). If the event state has not changed from posted to executed, connected systems manager 113 generates a level 2 severity incident and sends to a support console. A third period of time is given by connected systems manager 113 of 5 minutes, if still not event state change to executed, connected systems manager 113 interacts with the retailer's incident management system 134 to generate a severity 1 incident or ticket. This causes support staff of the retailer to address the issue immediately either on store 120 or remotely via staff on store 120.

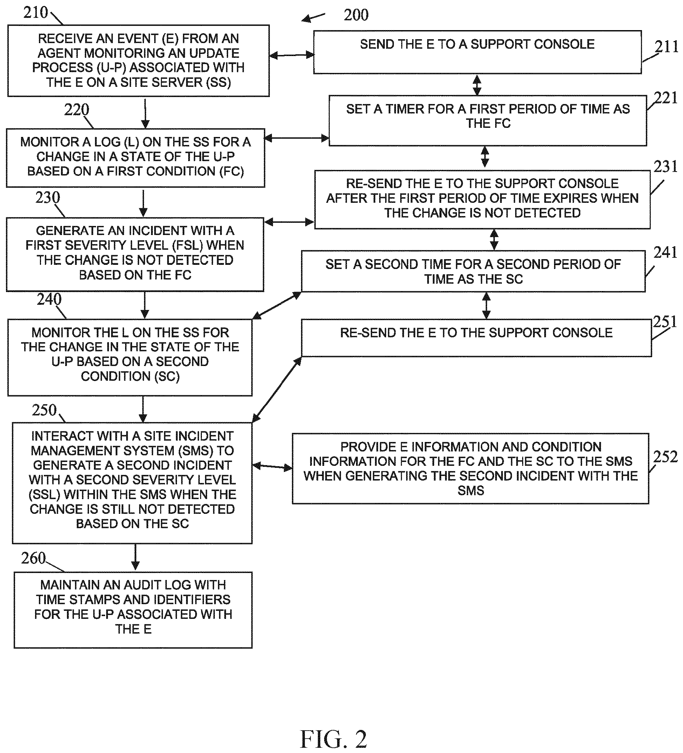

These and other embodiments are now discussed with reference to FIGS. 2-3.

FIG. 2 is a diagram of a method 200 for event monitoring and support system integration, according to an example embodiment. The software module(s) that implements the method 200 is referred to as an "event update process monitor." The event update process monitor is implemented as executable instructions programmed and residing within memory and/or a non-transitory computer-readable (processor-readable) storage medium and executed by one or more processors of a device. The processor(s) of the device that executes the event update process monitor are specifically configured and programmed to process the event update process monitor. The event update process monitor may have access to one or more network connections during its processing. The network connections can be wired, wireless, or a combination of wired and wireless.

In an embodiment, the device that executes the event update process monitor is server 120. In an embodiment, the server 120 is a cloud-based processing environment comprising a collection of physical servers cooperating as a single logical server (a cloud 120).

In an embodiment, the event update process monitor is all or some combination of the connected systems manager 113 and integrated incident management manager 114.

At 210, the event update process monitor receives an event from an agent that is monitoring an update process associated with the event on a site server.

In an embodiment, at 211, the event update process monitor sends the event to a support console or a dashboard.

At 220, the event update process monitor monitors a log on the site server for a change in a state of the update process based on a first condition.

In an embodiment of 211 and 220, at 221, the event update process monitor sets a time for a first period of time as the first condition.

At 230, the event update process monitor generates an incident with a first severity level when the change is not detected based on the first condition.

In an embodiment of 221 and 230, at 231, the event update process monitor re-sends the event to the support console and/or dashboard after the first period of time expires when the change is still not detected.

At 240, the event update process monitor monitors the log on the site server for the change in the state of the update process based on a second condition.

In an embodiment of 231 and 240, at 241, the event update process monitor sets a second time for a second period of time as the second condition.

At 250, the event update process monitor interacts with a site incident management system to generate a second incident with a second severity level within the site incident management system when the change in the update process is still not detected based on the second condition.

In an embodiment of 241 and 250, at 251, the event update process monitor re-sends the event to the support console.

In an embodiment, at 252, the event update process monitor provides event information and condition information for the first condition and the second condition to the site incident management system when generating the second incident with the site incident management system.

In an embodiment, at 260, the event update process monitor maintains an audit log with time stamps and identifiers for the update process associated with the event.

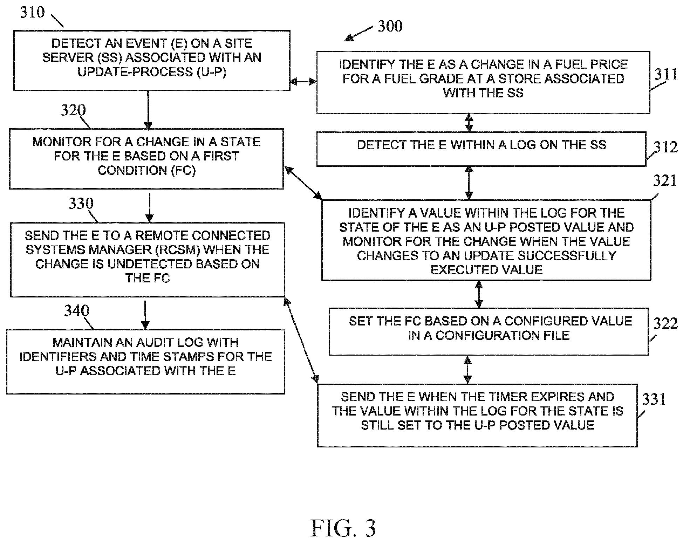

FIG. 3 is a diagram of another method 300 for event monitoring and support system integration according to an example embodiment. The software module(s) that implements the method 300 is referred to as an "event update process monitoring agent." The event update process monitoring agent is implemented as executable instructions programmed and residing within memory and/or a non-transitory computer-readable (processor-readable) storage medium and executed by one or more processors of a device. The processors that execute the event update process monitoring agent are specifically configured and programmed to process the event update process monitoring agent. The event update process monitoring agent may have access to one or more network connections during its processing. The network connections can be wired, wireless, or a combination of wired and wireless.

In an embodiment, the device that execute the event update process monitoring agent 135 is a retail site server 130. In an embodiment, the site server 130 is a site server 130 for store 120.

In an embodiment, the event update process monitoring agent is monitoring agent 135.

The event update process monitoring agent interacts with method 200 of FIG. 2.

At 310, the event update process monitoring agent detects an event on a site server associated with an update process. The event may be detected based on a change in state for the event within a log file, such as an update-process initiated or posted as a state change for a price change event within the log file.

In an embodiment, at 311, the event update process monitoring agent identifies the event as a change in a fuel price for a fuel grade at a store associated with the site server.

In an embodiment, at 312, the event update process monitoring agent detects the event within a log on the site server.

At 320, the event update process monitoring agent monitors for a change in a state for the event based on a first condition.

In an embodiment of 312 and 320, at 321, the event update process monitoring agent identifies a value within the log for the state of the event as a fuel update-process posted value and monitors for the change when the value changes to an update successfully executed value.

In an embodiment of 321 and at 322, the event update process monitoring agent sets the first condition value based on a configured value in a configuration file or based on a processing environmental value or parameter passed at run time to the event update process monitoring agent.

At 330, the event update process monitoring agent sends the event to a remote connected systems manager when the change is undetected based on the first condition.

In an embodiment of 322 and 330, at 331, the event update process monitoring agent sends the event when the timer expires and the value within the log for the state is still set to the update-process posted value.

In an embodiment, at 340, the event update process monitoring agent maintains an audit log with identifiers and time stamps for the update process associated with the event.

It should be appreciated that where software is described in a particular form (such as a component or module) this is merely to aid understanding and is not intended to limit how software that implements those functions may be architected or structured. For example, modules are illustrated as separate modules, but may be implemented as homogenous code, as individual components, some, but not all of these modules may be combined, or the functions may be implemented in software structured in any other convenient manner.

Furthermore, although the software modules are illustrated as executing on one piece of hardware, the software may be distributed over multiple processors or in any other convenient manner.

The above description is illustrative, and not restrictive. Many other embodiments will be apparent to those of skill in the art upon reviewing the above description. The scope of embodiments should therefore be determined with reference to the appended claims, along with the full scope of equivalents to which such claims are entitled.

In the foregoing description of the embodiments, various features are grouped together in a single embodiment for the purpose of streamlining the disclosure. This method of disclosure is not to be interpreted as reflecting that the claimed embodiments have more features than are expressly recited in each claim. Rather, as the following claims reflect, inventive subject matter lies in less than all features of a single disclosed embodiment. Thus, the following claims are hereby incorporated into the Description of the Embodiments, with each claim standing on its own as a separate exemplary embodiment.

## Claims

1. A computer-implemented method (200), comprising:
initiating an agent on a site server, the agent being executed by a site server processor of the site server;
dynamically interpreting, by the agent, a predefined configuration file that defines an event to be monitored and defines a location on the site server where the event can be detected;
identifying, by the agent, the event from a log based on the location on the site server;
setting, by the agent, a first timer for a first period of time;
monitoring, by the agent, an update process associated with the event on the site server to check a state associated with the event in the log for a change to an expected value associated with the update process successfully executing on the site server;
sending, by the agent, the event to a processor of a cloud-based processing environment when the state does not change;
receiving (210), by the processor of the cloud-based processing environment, the event from the agent;
setting, by the processor, a second timer for a second period of time;
monitoring (220), by the processor, the log on the site server for the change in the state of the update process;
generating (230), by the processor, an incident with a first severity level when the change is not detected during the second period of time;
setting, by the processor, a third timer for a third period of time;
monitoring (240), by the processor, the log on the site server for the change in the state of the update process;
interacting (250), by the processor, with a site incident management system of the site server to generate a second incident with a second severity level within the site incident management system when the change is still not detected during the third period of time; and
updating, by the processor, a dashboard with an event identifier and event information for the event.

2. The method (200) of claim 1 further comprising, maintaining (260) an audit log with time stamps and identifiers for the update process associated with the event.

3. The method (200) of claim 1, wherein receiving (210) further includes sending (211) the event to a support console.

4. The method (200) of claim 1, wherein generating (230) further includes re-sending (231) the event to the support console after the first period of time expires when the change is not detected.

5. The method (200) of claim 1, wherein interacting (250) further includes re-sending (251) the event to the support console.

6. The method (200) of claim 1, wherein interacting (250) further includes providing (252) the event identifier, the event information and condition information for the first condition and the second condition to the site incident management system when generating the second incident with the site incident management system.

7. A system (100) comprising:
a first server (110) comprising a first processor (111) and a first non-transitory computer-readable storage medium (112);
the first non-transitory computer-readable storage medium (112) comprising a first set of executable instructions;
a second server (130) comprising a second processor (131) and a second non-transitory computer-readable storage medium (132);
the second non-transitory computer-readable storage medium (132) comprising a second set of executable instructions;
the first set of executable instructions when executed by the first processor (111) from the first non-transitory computer-readable storage medium (112) cause the first processor (111) to:
dynamically interpret a predefined configuration file that defines an event to be monitored and defines a location on the first server where the event can be detected;
detect the event associated with an update process in a log on the first server (110) based on said location;
set a timer for a first period of time;
check a state associated with the event in the log for a change to an expected value associated with the update process successfully executing on the first server (110); and
send the event to the second set of executable instructions when the state does not change;
the second set of executable instructions when executed by the second processor (131) from the second non-transitory computer-readable storage medium (132) cause the second processor (131) to:
receive the event from the first set of executable instructions;
set a second timer for a second period of time;
check the state in the log on the first server for the change;
when the state does not reflect the change, sett a third timer for a third period of time;
check the state in the log on the first server for the change;
when the state does not reflect the change, interact with an incident management system (114) of the first server (110) to generate an incident with a severity level that will initiate support staff to investigate the update process; and
update a dashboard with an event identifier and event information for the event.

8. The system (100) of claim 7, wherein the first set of executable instructions corresponding with the detecting when executed by the first processor (111) from the first non-transitory computer-readable storage medium (112) further cause the first processor (111) to:
detect the event based on an initial value associated with the state being switched to update process posted.

9. The system (100) of claim 8, wherein the second set of executable instructions corresponding with the receiving when executed by the second processor from the second non-transitory computer-readable storage medium (132) further cause the second processor (131) to:
send the event to a support console.

10. The system (100) of claim 9, wherein the second set of executable instructions when executed by the second processor (131) from the second non-transitory computer-readable storage medium (132) further cause the second processor (131) to:
re-send the event to the support console after the second timer when the change remains undetected; and
re-send the event to the support console after the third timer when the change remains undetected.

## Patentansprüche

1. Computerimplementiertes Verfahren (200), umfassend:
Initiieren eines Agenten auf einem Standortserver, wobei der Agent durch einen Standortserverprozessor des Standortservers ausgeführt wird;
dynamisches Interpretieren, durch den Agenten, einer vordefinierten Konfigurationsdatei, die ein zu überwachendes Ereignis definiert und einen Ort auf dem Standortserver definiert, an dem das Ereignis detektiert werden kann;
Identifizieren, durch den Agenten, des Ereignisses aus einem Protokoll basierend auf dem Ort auf dem Standortserver;
Einstellen, durch den Agenten, eines ersten Timers für einen ersten Zeitraum;
Überwachen, durch den Agenten, eines mit dem Ereignis assoziierten Aktualisierungsprozesses auf dem Standortserver, um einen Status, der mit dem Ereignis in dem Protokoll assoziiert ist, auf eine Änderung eines erwarteten Wertes zu prüfen, der mit dem Aktualisierungsprozess assoziiert ist, der erfolgreich auf dem Standortserver ausgeführt wird;
Senden, durch den Agenten, des Ereignisses an einen Prozessor einer cloudbasierten Verarbeitungsumgebung, wenn sich der Status nicht ändert;
Empfangen (210), durch den Prozessor der cloudbasierten Verarbeitungsumgebung, des Ereignisses von dem Agenten;
Einstellen, durch den Prozessor, eines zweiten Timers für einen zweiten Zeitraum;
Überwachen (220), durch den Prozessor, des Protokolls auf dem Standortserver hinsichtlich der Änderung des Status des Aktualisierungsprozesses;
Erzeugen (230), durch den Prozessor, eines Vorfalls mit einem ersten Schweregrad, wenn die Änderung nicht während des zweiten Zeitraums detektiert wird;
Einstellen, durch den Prozessor, eines dritten Timers für einen dritten Zeitraum;
Überwachen (240), durch den Prozessor, des Protokolls auf dem Standortserver hinsichtlich der Änderung des Status des Aktualisierungsprozesses;
Interagieren (250), durch den Prozessor, mit einem Standortvorfallmanagementsystem des Standortservers, um einen zweiten Vorfall mit einer zweiten Schweregradstufe innerhalb des Standortvorfallmanagementsystems zu erzeugen, wenn die Änderung während des dritten Zeitraums noch nicht detektiert wird; und
Aktualisieren, durch den Prozessor, eines Dashboards mit einer Ereigniskennung und Ereignisinformationen für das Ereignis.

2. Verfahren (200) nach Anspruch 1, ferner umfassend das Führen (260) eines Prüfprotokolls mit Zeitstempeln und Kennungen für den Aktualisierungsprozess, der mit dem Ereignis assoziiert ist.

3. Verfahren (200) nach Anspruch 1, wobei das Empfangen (210) ferner ein Senden (211) des Ereignisses an eine Unterstützungskonsole umfasst.

4. Verfahren (200) nach Anspruch 1, wobei das Erzeugen (230) ferner ein erneutes Senden (231) des Ereignisses an die Unterstützungskonsole umfasst, nachdem der erste Zeitraum abgelaufen ist, wenn die Änderung nicht detektiert wird.

5. Verfahren (200) nach Anspruch 1, wobei das Interagieren (250) ferner ein erneutes Senden (251) des Ereignisses an die Unterstützungskonsole umfasst.

6. Verfahren (200) nach Anspruch 1, wobei das Interagieren (250) ferner ein Bereitstellen (252) der Ereigniskennung, der Ereignisinformationen und der Bedingungsinformationen für die erste Bedingung und die zweite Bedingung an das Standortvorfallmanagementsystem umfasst, wenn der zweite Vorfall mit dem Standortvorfallmanagementsystem erzeugt wird.

7. System (100), umfassend:
einen ersten Server (110), der einen ersten Prozessor (111) und ein erstes nicht flüchtiges computerlesbares Speichermedium (112) umfasst;
wobei das erste nicht flüchtige computerlesbare Speichermedium (112) einen ersten Satz ausführbarer Anweisungen umfasst;
einen zweiten Server (130), der einen zweiten Prozessor (131) und ein zweites nicht flüchtiges computerlesbares Speichermedium (132) umfasst;
wobei das zweite nicht flüchtige computerlesbare Speichermedium (132) einen zweiten Satz ausführbarer Anweisungen umfasst;
wobei der erste Satz ausführbarer Anweisungen bei Ausführung durch den ersten Prozessor (111) von dem ersten nicht flüchtigen computerlesbaren Speichermedium (112) den ersten Prozessor (111) veranlasst zum:
dynamischen Interpretieren einer vordefinierten Konfigurationsdatei, die ein zu überwachendes Ereignis definiert und einen Ort auf dem ersten Server definiert, an dem das Ereignis detektiert werden kann;
Detektieren des Ereignisses, das mit einem Aktualisierungsprozess in einem Protokoll auf dem ersten Server (110) assoziiert ist, basierend auf dem Ort;
Einstellen eines Timers für einen ersten Zeitraum;
Überprüfen eines Zustands, der mit dem Ereignis in dem Protokoll assoziiert ist, auf eine Änderung eines erwarteten Werts, der mit dem Aktualisierungsprozess assoziiert ist, der erfolgreich auf dem ersten Server (110) ausgeführt wird; und
Senden des Ereignisses an den zweiten Satz ausführbarer Anweisungen, wenn sich der Status nicht ändert;
wobei der zweite Satz ausführbarer Anweisungen bei Ausführung durch den zweiten Prozessor (131) von dem zweiten nicht flüchtigen computerlesbaren Speichermedium (132) den zweiten Prozessor (131) veranlasst zum:
Empfangen des Ereignisses von dem ersten Satz ausführbarer Anweisungen;
Einstellen eines zweiten Timers für einen zweiten Zeitraum;
Überprüfen des Status in dem Protokoll auf dem ersten Server hinsichtlich der Änderung;
wenn der Zustand die Änderung nicht widerspiegelt, Einstellen eines dritten Timers für einen dritten Zeitraum;
Überprüfen des Status in dem Protokoll auf dem ersten Server hinsichtlich der Änderung;
wenn der Status die Änderung nicht widerspiegelt, Interagieren mit einem Vorfallmanagementsystem (114) des ersten Servers (110), um einen Vorfall mit einem Schweregrad zu erzeugen, der eine Untersuchung des Aktualisierungsprozesses durch Unterstützungsmitarbeiter einleitet; und
Aktualisieren eines Dashboards mit einer Ereigniskennung und Ereignisinformationen für das Ereignis.

8. System (100) nach Anspruch 7, wobei der erste Satz ausführbarer Anweisungen, die dem Detektieren entsprechen, bei Ausführung durch den ersten Prozessor (111) von dem ersten nicht flüchtigen computerlesbaren Speichermedium (112) den ersten Prozessor (111) ferner zu Folgendem veranlasst:
Detektieren des Ereignisses basierend auf einem Anfangswert, der mit dem Status assoziiert ist, der auf den veröffentlichten Aktualisierungsprozess umgeschaltet wird.

9. System (100) nach Anspruch 8, wobei der zweite Satz ausführbarer Anweisungen, die dem Empfangen entsprechen, bei Ausführung durch den zweiten Prozessor von dem zweiten nicht flüchtigen computerlesbaren Speichermedium (132) den zweiten Prozessor (131) ferner zu Folgendem veranlasst:
Senden des Ereignisses an eine Unterstützungskonsole.

10. System (100) nach Anspruch 9, wobei der zweite Satz ausführbarer Anweisungen bei Ausführung durch den zweiten Prozessor (131) von dem zweiten nicht flüchtigen computerlesbaren Speichermedium (132) den zweiten Prozessor (131) ferner zu Folgendem veranlasst:
erneutes Senden des Ereignisses an die Unterstützungskonsole nach dem zweiten Timer, wenn die Änderung weiterhin nicht detektiert ist; und
erneutes Senden des Ereignisses an die Unterstützungskonsole nach dem dritten Timer, wenn die Änderung weiterhin nicht detektiert ist.

## Revendications

1. Procédé mis en œuvre par ordinateur (200), comprenant :
le lancement d'un agent sur un serveur de site, l'agent étant exécuté par un processeur de serveur de site du serveur de site ;
l'interprétation dynamique, par l'agent, d'un fichier de configuration prédéfini qui définit un événement à surveiller et définit un emplacement sur le serveur de site où l'événement peut être détecté ;
l'identification, par l'agent, de l'événement à partir d'un journal sur la base de l'emplacement sur le serveur de site ;
le réglage, par l'agent, d'un premier temporisateur pour une première période de temps ;
la surveillance, par l'agent, d'un processus de mise à jour associé à l'événement sur le serveur de site pour vérifier un état associé à l'événement dans le journal pour un changement d'une valeur attendue associée au processus de mise à jour s'exécutant avec succès sur le serveur de site ;
l'envoi, par l'agent, de l'événement à un processeur d'un environnement de traitement en nuage lorsque l'état ne change pas ;
la réception (210), par le processeur de l'environnement de traitement en nuage, de l'événement provenant de l'agent ;
le réglage, par le processeur, d'un deuxième temporisateur pour une deuxième période de temps ;
la surveillance (220), par le processeur, du journal sur le serveur de site pour le changement dans l'état du processus de mise à jour ;
la génération (230), par le processeur, d'un incident avec un premier niveau de gravité lorsque le changement n'est pas détecté pendant la deuxième période de temps ;
le réglage, par le processeur, d'un troisième temporisateur pour une troisième période de temps ;
la surveillance (240), par le processeur, du journal sur le serveur de site pour le changement dans l'état du processus de mise à jour ;
l'interaction (250), par le processeur, avec un système de gestion d'incident de site du serveur de site pour générer un deuxième incident avec un deuxième niveau de gravité au sein du système de gestion d'incident de site lorsque le changement n'est pas encore détecté pendant la troisième période de temps ; et
la mise à jour, par le processeur, d'un tableau de bord avec un identifiant d'événement et des informations d'événement pour l'événement.

2. Procédé (200) selon la revendication 1, comprenant en outre la tenue à jour (260) d'un journal d'audit avec des estampilles temporelles et des identifiants pour le processus de mise à jour associé à l'événement.

3. Procédé (200) selon la revendication 1, dans lequel la réception (210) comporte en outre l'envoi (211) de l'événement à une console d'assistance.

4. Procédé (200) selon la revendication 1, dans lequel la génération (230) comporte en outre le nouvel envoi (231) de l'événement à la console d'assistance après l'expiration de la première période de temps lorsque le changement n'est pas détecté.

5. Procédé (200) selon la revendication 1, dans lequel l'interaction (250) comporte en outre le nouvel envoi (251) de l'événement à la console d'assistance.

6. Procédé (200) selon la revendication 1, dans lequel l'interaction (250) comporte en outre la fourniture (252) de l'identifiant d'événement, des informations d'événement et des informations de condition pour la première condition et la deuxième condition au système de gestion d'incident de site lors de la génération du deuxième incident avec le système de gestion d'incident de site.

7. Système (100) comprenant :
un premier serveur (110) comprenant un premier processeur (111) et un premier support de stockage non transitoire lisible par ordinateur (112) ;
le premier support de stockage non transitoire lisible par ordinateur (112) comprenant un premier ensemble d'instructions exécutables ;
un deuxième serveur (130) comprenant un deuxième processeur (131) et un deuxième support de stockage non transitoire lisible par ordinateur (132) ;
le deuxième support de stockage non transitoire lisible par ordinateur (132) comprenant un deuxième ensemble d'instructions exécutables ;
le premier ensemble d'instructions exécutables, lorsqu'il est exécuté par le premier processeur (111) à partir du premier support de stockage non transitoire lisible par ordinateur (112), amène le premier processeur (111) à :
interpréter de manière dynamique un fichier de configuration prédéfini qui définit un événement à surveiller et définit un emplacement sur le premier serveur où l'événement peut être détecté ;
détecter l'événement associé à un processus de mise à jour dans un journal sur le premier serveur (110) sur la base dudit emplacement ;
régler un temporisateur pour une première période de temps ;
vérifier un état associé à l'événement dans le journal pour un changement d'une valeur attendue associée au processus de mise à jour exécuté avec succès sur le premier serveur (110) ; et
envoyer l'événement au deuxième ensemble d'instructions exécutables lorsque l'état ne change pas ;
le deuxième ensemble d'instructions exécutables, lorsqu'il est exécuté par le processeur (131) à partir du deuxième support de stockage non transitoire lisible par ordinateur (132), amène le deuxième processeur (131) à :
recevoir l'événement du premier ensemble d'instructions exécutables ;
régler un deuxième temporisateur pendant une deuxième période de temps ;
vérifier l'état dans le journal sur le premier serveur pour le changement ;
lorsque l'état ne reflète pas le changement, régler un troisième temporisateur pendant une troisième période de temps ;
vérifier l'état dans le journal sur le premier serveur pour le changement ;
lorsque l'état ne reflète pas le changement, interagir avec un système de gestion d'incident (114) du premier serveur (110) pour générer un incident avec un niveau de gravité qui déclenchera une enquête par le personnel d'assistance sur le processus de mise à jour ; et
mettre à jour un tableau de bord avec un identifiant d'événement et des informations d'événement pour l'événement.

8. Système (100) selon la revendication 7, dans lequel le premier ensemble d'instructions exécutables correspondant à la détection, lorsqu'il est exécuté par le premier processeur (111) à partir du premier support de stockage non transitoire lisible par ordinateur (112), amène en outre le premier processeur (111) à :
détecter l'événement sur la base d'une valeur initiale associée à l'état en cours de commutation vers le processus de mise à jour publié.

9. Système (100) selon la revendication 8, dans lequel le deuxième ensemble d'instructions exécutables correspondant à la réception, lorsqu'il est exécuté par le deuxième processeur à partir du deuxième support de stockage non transitoire lisible par ordinateur (132), amène en outre le deuxième processeur (131) à :
envoyer l'événement à une console d'assistance.

10. Système (100) selon la revendication 9, dans lequel le deuxième ensemble d'instructions exécutables, lorsqu'il est exécuté par le deuxième processeur (131) à partir du deuxième support de stockage non transitoire lisible par ordinateur (132), amène en outre le deuxième processeur (131) à :
envoyer à nouveau l'événement à la console d'assistance après le deuxième temporisateur lorsque le changement reste non détecté ; et
envoyer à nouveau l'événement à la console d'assistance après le troisième temporisateur lorsque le changement reste non détecté.
